Europäisches Patentamt

European Patent Office

Office européen des brevets

(19)

(11) EP 0 826 268 B1

(12) **FASCICULE DE BREVET EUROPEEN**

| | |
|---|---|
| (45) Date de publication et mention de la délivrance du brevet:<br>**13.01.1999 Bulletin 1999/02** | (51) Int Cl.$^6$: **H02M 1/00** |
| (21) Numéro de dépôt: **96916209.8** | (86) Numéro de dépôt international:<br>**PCT/FR96/00740** |
| (22) Date de dépôt: **15.05.1996** | (87) Numéro de publication internationale:<br>**WO 96/37038 (21.11.1996 Gazette 1996/51)** |

(54) **DISPOSITIF D'ALIMENTATION ELECTRONIQUE**

ELEKTRONISCHE LEISTUNGSVERSORGUNGSSCHALTUNG

ELECTRONIC POWER SUPPLY DEVICE

| | |
|---|---|
| (84) Etats contractants désignés:<br>**DE FR GB IT** | (72) Inventeur: **WUIDART, Luc**<br>**F-83190 Pourrières (FR)** |
| (30) Priorité: **19.05.1995 FR 9506007** | (74) Mandataire: **Ballot, Paul et al**<br>**Cabinet Ballot-Schmit,**<br>**16, Avenue du Pont Royal**<br>**94250 Cachan (FR)** |
| (43) Date de publication de la demande:<br>**04.03.1998 Bulletin 1998/10** | |
| (73) Titulaire: **SGS-THOMSON MICROELECTRONICS S.A.**<br>**94250 Gentilly (FR)** | (56) Documents cités:<br>**EP-A- 0 600 340      EP-A- 0 602 908**<br>**WO-A-91/02400      WO-A-92/22953**<br>**US-A- 5 345 164** |

# Description

L'invention concerne un dispositif d'alimentation électronique. Elle concerne plus particulièrement un dispositif avec circuit de correction du facteur de puissance.

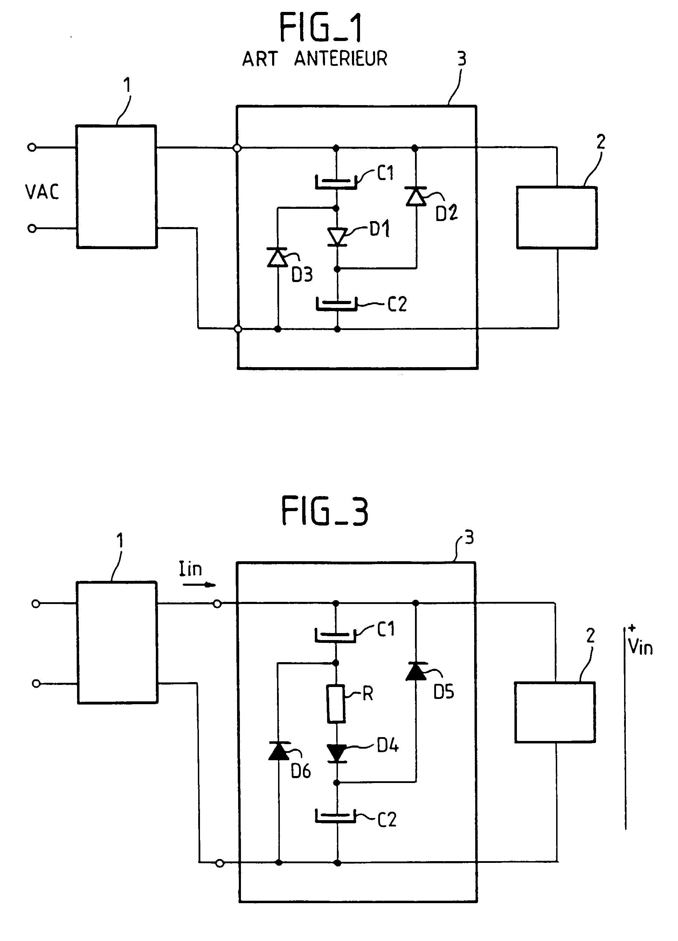

On connaît un circuit de correction de facteur de puissance sans inductance de ligne, qui utilise des diodes de redressement pour charger en série et décharger en parallèle deux condensateurs de filtrage, en sortie d'un redresseur en pont. Un schéma électrique d'un tel circuit est représenté en figure 1. Un redresseur en pont reçoit sur une paire de bornes d'entrée une tension VAC variant périodiquement. Un circuit 3 de correction de facteur de puissance est connecté entre le redresseur 1 et une charge 2, sur une paire de bornes de sortie du redresseur. Ce circuit 3 utilise deux condensateurs de filtrage, C1 et C2, de même capacité.

Une première diode de redressement D1 est connectée en direct entre les deux condensateurs C1 et C2. L'ensemble est connecté entre deux bornes de sortie du redresseur.

Une deuxième diode de redressement D2 est connectée en inverse en parallèle sur le premier condensateur C1 en série avec la première diode D1.

Une troisième diode D3 de redressement est connectée en inverse en parallèle sur le deuxième condensateur en série avec la première diode D1.

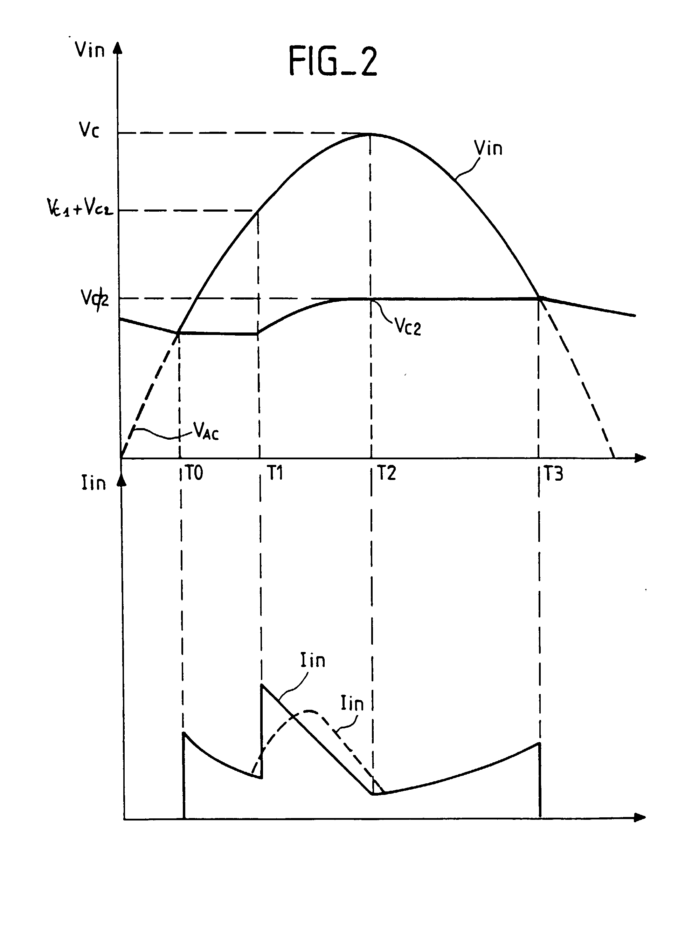

Le fonctionnement d'un tel circuit est maintenant expliqué, en relation avec les courbes représentées à la figure 2.

En régime établi, au début d'une alternance de la tension de ligne $V_{in}$, la diode D1 est bloquée. Les diodes D2 et D3 sont passantes, ce qui correspond à la fin de période de décharge des condensateurs C1 et C2. Quand la tension de ligne $V_{in}$ dépasse la tension de charge des condensateurs, les diodes D2 et D3 passent à l'état bloqué. Puis, quand la tension de ligne $V_{in}$ dépasse la somme des tension de charge des deux condensateurs (Vc1 + Vc2), la diode D1 se met à conduire (T1) et les deux condensateurs se chargent en série, jusqu'à ce que la tension de ligne atteigne sa valeur crête Vc (T2). La diode D1 repasse alors à l'état bloqué. Les deux condensateurs sont chacun chargés à Vc/2 (condensateurs identiques).

La tension de ligne qui décroît alors, va devenir inférieure à cette tension de charge Vc/2 : les diodes D2 et D3 deviennent donc passantes, D1 étant toujours bloquée. Les condensateurs se retrouvent connectés en parallèle. Le condensateur C1 alimente la charge via la diode D3 et le condensateur C2 alimente la charge via la diode D2. Ceci s'arrête dès que la tension de ligne $V_{in}$ recommence à croître (alternance suivante), et devient supérieure à la tension de chaque condensateur : les diodes D2 et D3 repassent à l'état bloqué ; la diode D1 est toujours bloquée. On est en TO. Le cycle recommence. On obtient la forme d'onde de courant $I_{in}$ représentée sur la figure 2.

Entre T0 et T1, c'est le secteur (VAc) qui alimente directement la charge (D1, D2 et D3 bloquées). La forme du courant pour une puissance $P_{out}$ consommée dans la charge 2 est donnée par la relation :

$$I_{in(t)} = P_{out}/V_{in(t)}$$

Pour $P_{out}$ constante, entre T0 et TA, $V_{in}$ croît et $I_{in}$ décroît.

Entre T1 et T2, les condensateurs se chargent. Au courant consommé dans la charge 2 (en pointillé) se superpose le courant de charge des condensateurs. Entre T2 et T3, la charge des condensateurs chacun à la moitié de la tension crête Vc est terminée. Le courant $I_{in}$ est seulement le courant consommé dans la charge 2 et on retrouve la forme d'onde du courant donnée par la relation : $I_{in}(t) = P_{out}/V_{in(t)}$.

La tension de ligne décroît et $I_{in}$ décroît (avec $P_{out}$ constante).

Enfin, entre T3 et T0, ce sont les condensateurs C1 et C2 qui alimentent la charge 2. Le courant $I_{in}$ appelé dans le redresseur est nul.

Le circuit 3 permet donc d'augmenter l'angle de conduction du redresseur en pont : la forme d'onde du courant $I_{in}$ est étalée sur l'alternance de tension, avec 3 phases de conduction : [T0-T1], [T1-T2] et [T2-T3]. De cette manière on améliore le facteur de puissance du dispositif (rapport de la puissance réelle à la puissance totale apparente), puisque l'on force la ligne à consommer du courant pendant la partie la plus significative de l'onde de tension, c'est à dire quand la valeur instantanée de la tension de ligne dépasse la moitié de la valeur crête Vc.

Cependant pour la charge des condensateurs, on a un appel de courant de charge qui entraîne un front de montée raide du courant de ligne. On a donc un pic de courant, ce qui correspond à un contenu harmonique basse fréquence non négligeable, qui limite la valeur du facteur de puissance (fourniture de puissance à des fréquences harmoniques différentes de la fréquence de ligne).

Dans l'invention, on s'intéresse plus particulièrement à un dispositif d'alimentation électronique d'une charge comprenant un redresseur en pont recevant une tension périodique sur une paire de bornes d'entrée, et un circuit de correction de facteur de puissance connecté sur une paire de bornes de sortie du redresseur et comprenant deux condensateurs, une diode de redressement pour les charger en série et deux diodes de redressement pour les décharger en parallèle. Le circuit de correction comprend en outre une résistance en série avec la première diode de redressement, pour limiter le courant d'appel dans les condensateurs et pour diminuer le contenu harmonique basse fréquence du courant conduit par le redresseur.

L'addition d'une résistance en série avec la diode qui permet le contrôle de la charge en série des condensateurs, permet d'atténuer le courant de charge, ce qui se traduit par un forme d'onde du courant de ligne plus arrondie : le contenu harmonique basse fréquence d'une telle forme d'onde est très atténué. Le facteur de puissance du dispositif est ainsi nettement amélioré.

De plus, à la mise sous tension, les condensateurs se chargent tout de suite : la résistance va alors en outre limiter le courant d'appel qui, si il est trop fort, altère les diodes et les condensateurs.

Un tel dispositif est connu de la demande de brevet européen EP-A-0 602 908.

Cependant, un tel dispositif ne protège pas des pics de tension sur le secteur, qui peuvent en particulier endommager les condensateurs (réduction sensible de leur durée de vie) ainsi que des autres éléments électroniques de la charge.

Un objet de l'invention est donc de protéger contre les surtensions un dispositif d'alimentation électronique.

Dans l'invention, on s'est rendu compte que l'on pouvait avantageusement tirer partie de la structure particulière à trois diodes du circuit de correction de facteur de puissance pour protéger la circuiterie en aval du redresseur contre des surtensions sur le secteur.

Dans l'invention, on utilise un commutateur de puissance commandé en courant, en parallèle sur la résistance et la diode qui contrôle la charge en série des condensateurs. Et on utilise une diode zener pour chacune des deux diodes qui contrôle la décharge des condensateurs. De cette manière, on peut protéger la circuiterie contre des surtensions supérieures à deux tensions zener et les condensateurs contre des surtensions supérieures à une tension zener.

D'autres caractéristiques et avantages de l'invention sont détaillés dans la description jointe faite en référence aux dessins annexés dans lesquels :

- la figure 1 est un schéma électrique d'un circuit de correction de facteur de puissance déjà décrit,
- la figure 2 représente les formes d'onde de courant et de tension de ligne correspondantes,
- la figure 3 représente un schéma d'un circuit de correction de facteur de puissance utilisé dans l'invention et
- la figure 4 représente un schéma d'un circuit de correction de facteur de puissance selon l'invention.

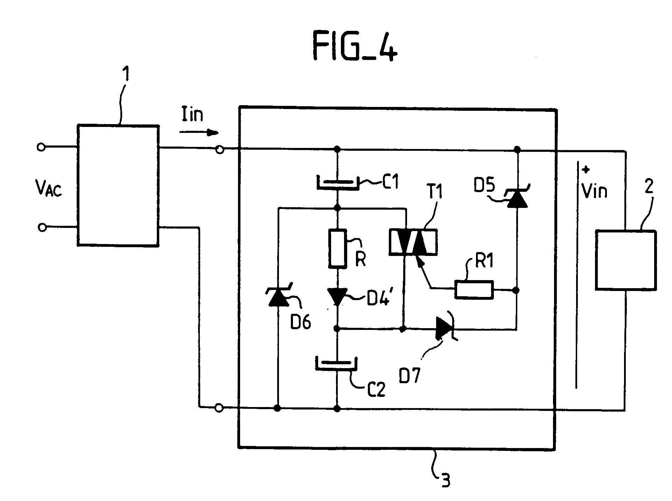

La figure 3 représente un schéma d'un circuit 3 de correction de facteur de puissance utilisé dans l'invention, connecté sur une paire de bornes de sortie d'un redresseur en pont alimenté par une tension secteur $V_{AC}$ sur une paire de bornes de sortie.

Le redresseur 1 et le circuit de correction de facteur de puissance 3 alimente une charge 2.

Le circuit 3 comprend deux condensateurs de filtrage C1 et C2 en série sur les bornes de sortie du redresseur 1. Une résistance R et une première diode D4 montée en direct sont connectées en série entre les deux condensateurs C1, C2.

Une deuxième diode D5 est connectée en inverse et en parallèle sur l'ensemble série du premier condensateur C1, de la résistance R et de la première diode D4.

Une troisième diode D6 est connectée en inverse et en parallèle sur l'ensemble série du deuxième condensateur C2, de la résistance R et de la première diode D4.

L'ensemble résistance R et première diode D4 contrôle la charge en série des condensateurs C1 et C2. La résistance R permet d'une part de limiter la valeur du courant d'appel dans les condensateurs à la première mise sous tension. Dans le pire cas de figure, où l'on met sous tension l'équipement alors que l'on est au sommet de l'alternance, la valeur du courant d'appel sera ainsi limitée à Vc/R, Vc étant la tension crête de la tension de ligne. La résistance R permet d'autre part d'atténuer le courant de charge, ce qui se traduit par un arrondi de la portion de forme d'onde du courant de ligne correspondante, comme représenté en pointillé sur la figure 2 (intervalle [T1-T2]).

Dans l'invention, on utilise la structure particulière à trois diodes pour protéger le dispositif contre les surtensions.

Un circuit de correction du facteur de puissance utilisé pour la protection contre les surtensions selon l'invention est représenté sur la figure 4.

Pour les diodes D5 et D6 qui contrôlent la décharge des condensateurs en parallèle, on choisit selon l'invention des diodes de redressement à limitation de tension (diode zener).

En parallèle de la première diode de redressement D4 en série avec la résistance R, on place un commutateur électronique T1 commandé en courant inverse par l'une des diodes zener, D5 dans l'exemple. Ce commutateur électronique est par exemple un triac, et une résistance R1 connectée à la diode zener D5 fournit le courant de gâchette négatif nécessaire à déclencher le triac.

En cas de surtension, l'ensemble D6, T1, D5 fournit un passage au courant inverse et permet de protéger la circuiterie contre des surtensions supérieures à seulement deux fois la tension zener.

Ce circuit avec commutateur commandé en courant nécessite en pratique une autre diode zener D7 connectée entre la diode zener D5 et le commutateur, pour que ce dernier soit correctement commandé pendant la surtension. En pratique, une diode zener de 5 volts est suffisante pour cette tâche.

Les diodes D5 et D6 doivent être telles qu'elles restent bloquées quand la tension de ligne atteint la valeur crête Vc, ce qui conduit en pratique à prendre comme tension zener Vz > Vc/2.

Par exemple, pour 220 $V_{AC}$, la tension crête Vc de la tension de ligne redressée $V_{in}$ est égale à 310 volts. Si les diodes zener sont choisies avec une tension zener de 180 volts, la circuiterie est protégée pour des surtensions supérieures à 360 volts.

Le condensateur C1 est lui directement protégé

EP 0 826 268 B1

contre les surtensions supérieures à une tension zéner, par la diode D6, soit contre les surtensions jointes supérieures à la moitié de la tension crête.

Le condensateur C2 est protégé de la même manière par la diode D5 (en série avec la diode D7 de faible tension zener comme on l'a vu).

La structure particulière de l'invention permet donc de protéger la circuiterie contre des surtensions juste supérieures à la tension crête de ligne et les condensateurs contre des surtensions justes supérieures à la moitié de la tension crête de ligne.

Cette structure de protection avec le dispositif d'alimentation peut avantageusement se présenter sous forme d'un circuit intégré.

On aurait pu retenir un autre dispositif de protection. En effet, la structure du circuit 3 de correction de facteur de puissance offre trois diodes de redressement en série sur la paire de bornes de sortie du redresseur. En utilisant trois diodes de redressement à limitation de tension (diodes zener), on peut alors protéger la circuiterie en aval (la charge 2) contre des surtensions secteur supérieures à trois fois la tension de limitation (trois tensions zener). Par ailleurs, la structure offre ainsi deux diodes de redressement à limitation de tension en parallèle sur chacun des condensateurs : D4 et D5 pour le condensateur C1 et D4 et D6 par le condensateur C2.

De cette manière, on protège ainsi chaque condensateur contre des surtensions supérieures à deux fois la tension de limitation zener (soit deux tensions zener). Cette tension de limitation zener devrait alors être choisie supérieure à la moitié de la valeur crête Vc de la tension de ligne.

Par contre, la circuiterie et les condensateurs ne sont protégés que pour des surtensions plus élevées qu'avec le dispositif de la figure 4. En effet, les condensateurs sont protégés contre des surtensions justes supérieures à la tension crête de ligne au lieu de la moitié de celle-ci comme dans le dispositif de la figure 4. Notamment, le dispositif de la figure 4 permet d'améliorer sensiblement la durée de vie des condensateurs.

## Revendications

1.  Dispositif d'alimentation électronique d'une charge (2) comprenant un redresseur en pont (1) recevant une tension périodique ($V_{AC}$) sur une paire de bornes d'entrée, et un circuit (3) de correction de facteur de puissance connecté sur une paire de bornes de sortie du redresseur et comprenant deux condensateurs (C1, C2) avec une diode de redressement (D4) pour les charger en série et deux diodes de redressement (D5, D6) pour les décharger en parallèle, et une résistance (R) en série avec la première diode de redressement (D4) pour limiter le courant d'appel dans les condensateurs et pour diminuer le contenu harmonique basse fréquence du courant conduit par le redresseur (1), caractérisé en ce qu'il comprend un commutateur électronique (T1) commandé en courant connecté en parallèle sur la première diode de redressement (D4) en série avec la résistance (R), et en ce que les diodes de redressement (D5, D6) pour décharger en parallèle les condensateurs (C1, C2) sont des diodes zener, pour protéger le circuit de charge (2) contre des surtensions.

2.  Dispositif d'alimentation électronique selon la revendication 1, caractérisé en ce que ledit commutateur est un triac.

3.  Dispositif d'alimentation électronique selon la revendication 1 ou 2, caractérisé en ce que la commande en courant dudit commutateur est fournie par l'une des diodes zener.

4.  Dispositif d'alimentation électronique en circuit intégré selon l'une quelconque des revendications précédentes.

## Patentansprüche

1.  Elektronische Leistungsversorgungsschaltung für eine Last (2) mit einem Brückengleichrichter (1), die eine periodische Spannung ($V_{AC}$) an einem Paar von Eingangsanschlüssen empfängt, und einem Schaltkreis (3) zur Leistungsfaktorkorrektur, der an ein Paar von Ausgangsanschlüssen des Gleichrichters angeschlossen ist und zwei Kondensatoren (C1, C2) mit einer Gleichrichterdiode (D4), um sie seriell aufzuladen, und zwei Gleichrichterdioden (D5, D6), um sie parallel zu entladen, und einen Widerstand (R) in Reihe mit der ersten Gleichrichterdiode (D4), um den durch die Kondensatoren gezogenen Strom zu beschränken und den Anteil von niedrigen harmonischen Frequenzen des durch den Gleichrichter (1) geleiteten Stroms zu verringern, umfaßt,
dadurch gekennzeichnet, daß
sie einen elektronischen Umschalter (T1) umfaßt, der stromgesteuert ist und parallel zur ersten Gleichrichterdiode (D4) in Reihe mit dem Widerstand R geschaltet ist, und daß die Gleichrichterdioden (D5, D6) zum parallelen Entladen der Kondensatoren (C1, C2) Zener-Dioden sind, um den Lastschaltkreis (2) gegen Überspannungen zu schützen.

2.  Elektronische Versorgungsschaltung nach Anspruch 1, dadurch gekennzeichnet, daß der Umschalter ein Triac ist.

3.  Elektronische Versorgungsschaltung nach Anspruch 1 oder 2, dadurch gekennzeichnet, daß die Stromsteuerung des Umschalters über eine der Zener-Dioden erfolgt.

4. Elektronische Versorgungsschaltung in einem integrierten Schaltkreis nach einem der vorangehenden Ansprüche.

## Claims

1. Device for an electronic power supply to a load (2) comprising a bridge rectifier (1) receiving a periodic voltage ($V_{ac}$) at a pair of input terminals, and a power factor correction circuit (3) connected to a pair of output terminals of the rectifier and comprising two capacitors (C1, C2) with a rectifier diode (D4) for charging them in series and two rectifier diodes (D5, D6) for discharging them in parallel, and a resistor (R) in series with the first rectifier diode (D4) for limiting the surge current in the capacitors and for reducing the low-frequency harmonic content of the current conducted by the rectifier (1), characterised in that it comprises a current-controlled electronic switch (T1) connected in parallel to the first rectifier diode (D4) in series with the resistor (R), and in that the rectifier diodes (D5, D6) for discharging the capacitor (T1, T2) in parallel are Zener diodes, for protecting the load circuit (2) against overvoltages.

2. Electronic power supply device according to Claim 1, characterised in that the said switch is a triac.

3. Electronic power supply device according to Claim 1 or 2, characterised in that the current control of the said switch is supplied by one of the Zener diodes.

4. Integrated-circuit electronic power supply device according to any one of the preceding claims.

# FIG_1
### ART ANTERIEUR

# FIG_3

# FIG_2

Vin

Vc

$V_{c_1}+V_{c_2}$

$V_{c_2}$

Vin

$V_{c_2}$

$V_{AC}$

T0    T1    T2    T3

Iin

Iin

Iin

# FIG_4